# EUROPEAN PATENT APPLICATION

(11) **EP 1 161 056 A1**
(43) Date of publication of application: **05.12.2001**
(21) Application number: 00111695.3
(22) Date of filing: 31.05.2000
(51) Int. Cl.: H04L 29/08

(54) **Method for file transfer between a data generator and a post-processor in a telecommunication system**

(71) Applicant: Telefonaktiebolaget L M Ericsson (Publ), 126 25 Stockholm (SE)
(72) Inventor: Frantzen-Beckers, Dorothee, D-52538 Gangelt (DE)
(74) Representative: HOFFMANN - EITLE

(57) **Abstract**

The invention relates to the transfer of data files (CDRFs) from a file server (FS₁) of a data generator (NE) to a post-processor (POST) in a telecommunication system (SYS). The data generator (NE) composes a transfer request message (RQ) including an identification of the data file (CDRFs) to be transferred and an identification of the data generator (NE) itself. In response to receiving such a transfer request message (RQ), a trigger unit (TRIG) in the post-processor (POST) triggers a file transfer mechanism (TR₂) which pulls or retrieves data files autonomously from the data generator (NE) indicated in the transfer request message (RQ). Since the file transfer is carried out completely autonomously from the post-processor side, the processing load on the data generator side for the file transfer is reduced. The invention finds particular application in a telecommunication system (SYS) comprising a public land mobile radio communication system (PLMN) and a general packet radio service (GPRS). However, the invention is also applicable to other types of telecommunication systems (SYS).

## Description

### FIELD OF THE INVENTION

The invention relates to a method for transferring an output data file from an output data generator to a post-processor both of which are part of a telecommunication system and support a pull-based delivery mechanism for a file transfer. The invention also relates to the post-processor, the data generator and a telecommunication system comprising such a data generator and a post-processor.

In a telecommunication system, data generators which generate all kinds of data, e.g. communication-related data, charge-related data or node-related data, can be found at many places. For example, in a network of a telecommunication system, an exchange can comprise verification accounting devices which generate charge-related data regarding communications which originate from this exchange. If the network serves as a transit network for calls and communications of other networks, then the verification and remuneration accounting devices also generate charge-related data for routing the call which has originated in another network and needs to be routed to yet another network. Although the present invention in particular relates to a telecommunication system which is cellular and comprises a GPRS network (GPRS: General Packet Radio Service), the invention is not restricted to this specific type of network.

When the communication-data and/or the node-related data and/or the charge-related data have been collected by the data generator, the data is stored as records in the data generator, e.g. in a memory device of a file server provided in the data generator. Subsequently, there may be instances where there is need to transfer the collected data, i.e. the data files, to yet another device in the networks which performs a post-processing of the data (the data files). Various procedures are available for transferring such data files from the output data generator to the post-processor. However, as will be described below, in telecommunication systems such file transfers are initiated by the output data generator which has to take over the complete control and transfer of the data files as well as the necessary housekeeping functions, e.g. the deletion of files and the checking of the data consistency. Thus, there is placed a large burden on the CPU of the output data generator.

The present invention in particular addresses the problem as to how the processing load placed on the CPU of the output data generator can be reduced when a need arises for transferring a data file to a post-processor.

### BACKGROUND OF THE INVENTION

Although the invention is not restricted to a telecommunication system comprising a mobile radio communication system and a GPRS system, hereinafter the background of the invention will be described with reference to such a telecommunication system.

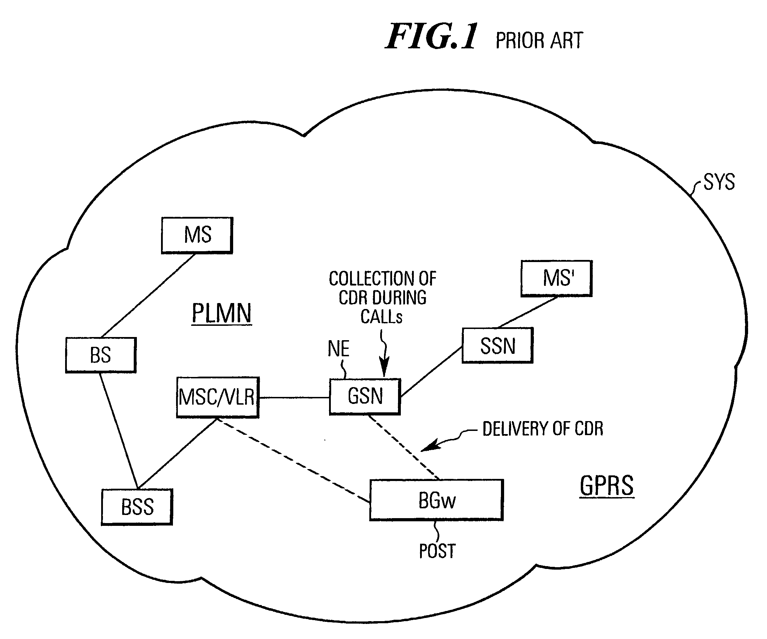

Fig. 1 shows a telecommunication system in accordance with the prior art. It comprises a public land mobile radio network PLMN and a GPRS system. The PLMN network comprises a mobile switching centre/visitor location register MSC/VLR which is connected to a base station system BSS comprising base stations BS which serve the individual mobile stations MS. A GPRS service node GSN serves as gateway to the MSC/VLR of the PLMN. The GPRS network also comprises Service Support Nodes SSN which serve the mobile stations MS' of the GPRS system.

Generally, the GSN node can be regarded as a network element NE which collects the communication-data, node-related and charge-related data, and which stores same in a memory device, i.e. in a file server. The post-processor POST can be a Billing Gateway BGw to which the data files containing e.g. the charge-related data need to be transferred (as indicated with "delivery of CDR"). However, the billing gateway BGw can of course also serve as a post-processor for other units in the telecommunication system SYS, e.g. for the MSC/VLR. In the case where the data generated by the network element NE relates to charging of calls, such charge-related data is normally stored as so-called Charge Data Records CDR in the file server.

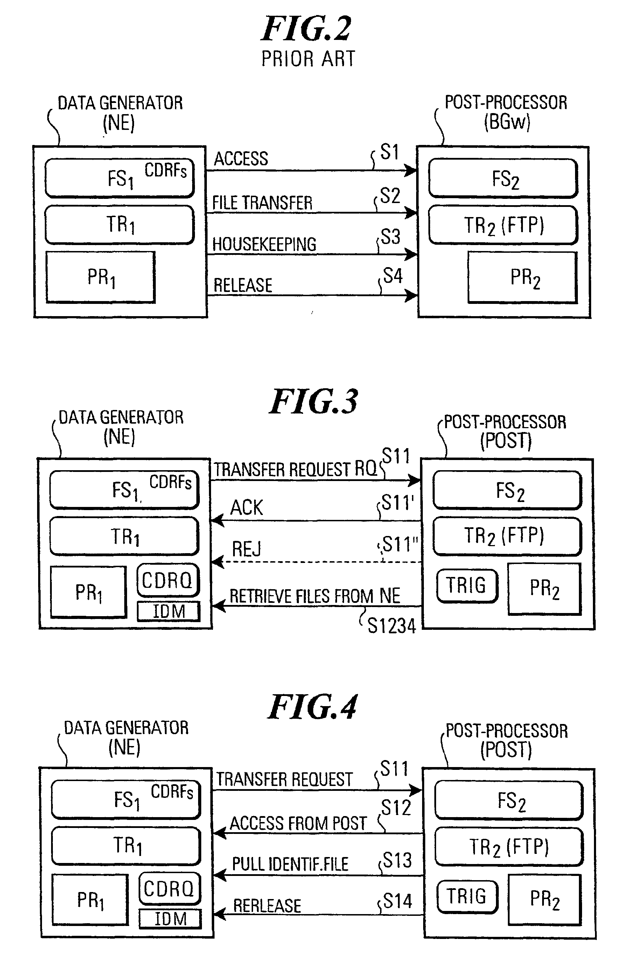

Schematically, Fig. 2 shows the exchange of signalling between the data generator (network element) NE and the post-processor BGw. Also shown in Fig. 2 is the file server FS₁ and FS₂ on the data generator side and the post-processor side as well as general processor means PR₁ and PR₂. The processing means PR₁ in the network element NE is responsible for collecting the respective data values and for storing same as records, e.g. charge data records CDR, in data files, e.g. charge data record files CDRFs.

The transferring of data files CDRFs from the data generator NE to the post-processor BGw comprises the steps S1-S4, as shown in Fig. 2. As preliminary remark it should be kept in mind that in telecommunication systems SYS it is always the unit which initiates the file transfer which also has to initiate and perform the file transfer and perform certain housekeeping functions.

In step S1 the file transfer unit TR₁ of the data generator NE initiates a delivery mechanism towards the post-processor BGw. That is, in step S1 the data generator NE tries to access the post-processor. As shown in Fig. 2, the post-processor BGw then answers with an acknowledgement message that files can be transferred to the post-processor.

In step S2 the file transfer is carried out by the file delivery mechanism TR₁. In particular, the file delivery mechanism TR₁.determines a data file to be transferred, retrieves the data file from the file server FS₁, transfers the data file to the post-processor and stores the data file in e.g. the file server FS₂ of the post-processor BGw. It should be noted that at this stage the post-processor BGw has only been involved passively in the file transfer, i.e. it has given an acknowledgement that files can be transferred.

Since the post-processor BGw has not been involved at all in the file transfer, it is again up to the file delivery mechanism TR₁ of the data generator NE to perform in step S3 some housekeeping functions. Such housekeeping functions comprise for example the execution of functions which assure that the data file was transferred safely, check data consistency and optionally delete all successfully transferred data from the file server FS₁ of the GSN node. Finally, in step S4 it is again the data generator NE which sends a release message to the post-processor to indicate that no desire of any further transferring of data files exist on the data generator side.

Special transfer techniques have been developed for allowing a data file transfer between units in a telecommunication system. For example, the applicable post-processor protocols for GSN initiated charge-data collection are the File Transfer Protocol FTP over the Transmission Control Protocol/Internet Protocol TCP/IP (where the post-processor acts as responder), the File Transfer/Access and Management FTAM over TCP/IP (where the post-processor BGw acts as a responder), or a Remote Procedure Call RPC over TCP/IP (where the post-processor BGw acts as a RPC server (responder)). For example, the last mentioned possibility of RPC over TCP/IP is used for hot billing. A product which has conventionally used such essentially "push-based CDR-file delivery mechanisms" (it is called push-based because the GSN initiates the file transfer and pushes the data file from the data generator to the post-processor, whilst the post-processor is essentially acting as responder and does not take part actively in the data file transfer) is for example used in the Ericsson Billing Gateway BGw R7. Another possibility of file transfer, not mentioned above, is of course a disc which is local or mounted with the network element file server FS₁. Conventionally, the file transfer was then done by just extracting the disc from the data generator and placing it into the post-processor.

As may be understood from the above description, in the conventional system the data generator (network element) not only has to collect the data which is supposed to be transferred to a post-processor, but it also has to complete burden of file transfer, housekeeping, deletion of files etc. Therefore, in existing solutions where FTP or FTAM is used and where the post-processor BGw only acts as a responder, all processing and handling must be carried out by the CPU on the data generator side. This places an unintended CPU load on the GSN side because the GSN has to actively take care of the housekeeping of the stored CDR files, read and transfer the stored data, assure data consistency on the receiving post-processor's file server FS₂, and afterwards optionally delete the transferred data from the file server FS₁ of the data generator NE.

Apart from the high CPU load in the data generator, there is a second problem in that the post-processor BGw, acting as a responder when FTAM, FTP or disc communication is used, starts to process the transferred file as soon as it is stored on the post-processor file server FS. Therefore, again the transferring network element NE must ensure that the data file is safely transferred to the post-processor. In order to prevent the post-processor from immediately processing the data file while it is still being transferred, a concept of temporary file names must be adopted. Only then it can be avoided that the post-processor starts processing the data before it has been completely transferred and before a data consistency can be assumed reliably. Therefore, in addition to the problem of a CPU load on the GSN side, the conventional file transfer in telecommunication systems also suffers from the fact that complicated temporary file name concepts need to be used in order to prevent the post-processor from starting to process data while it is still being transferred.

In the RPC communication over TCP/IP the post-processor does not completely act as a responder but also performs functions of a server. However, in this case it is only used to support hot billing collection (an immediate output) of records, e.g. charge data records CDRs, from the network element NE. However, even in this case the post-processor is not involved in an actual data transfer of data files despite the fact that of course the post-processor BGw has installed a file delivery mechanism consisting of the file server FS₂ and an appropriate file transfer a device TR₂ (FTP).

### SUMMARY OF THE INVENTION

As explained above, in telecommunication systems SYS file transfer between a data generator and a post-processor is carried out by initiating the file transfer from the data generator side. In telecommunication systems always the very unit which initiates the transfer will also be responsible for carrying out the file transfer and for performing additional overhead functions, such as housekeeping, deletion, data consistency etc. This places an undesirable high load on the processing device (CPU) of the data generator, and furthermore the data generator must ensure that all the data has been transferred to the post-processor before the post-processor can actually start processing in the transferred data.

Therefore, the object of the present invention is to provide a method, a data generator and a post-processor of a telecommunication system which allow a file transfer from the data generator to the post-processor with reduced processing load on the data generator side.

This object is solved by a method in accordance with claim 1. This object is also solved by a post processor according to claim 11. The object is also solved by an output data generator according to claim 16. The object is also solved by a telecommunication system according to claim 21.

One preferred aspect of the invention is a method for transferring an output data file from an output data generator to a post-processor both of which are part of a telecommunication system and support a pull-based delivery mechanism for file transfer, comprising the following steps: sending from said output data generator to said post-processor a file transfer request message indicating at least one data file to be transferred from said output data generator to said post-processor and an identification of the data generator from which the data file is to be transferred, triggering in said post-processor said pull-based delivery device in response to said file transfer request message, accessing said output data generator from said post-processor by said pull-based delivery device, and pulling the at least one data file from said output generating device to said post-processor by said pull-based delivery device.

Furthermore, another preferred aspect of the invention is a post-processor for fetching an output data file from an output data generator, said output data generator and preferably said post-processor being part of a telecommunication system and supporting a pull-based delivery mechanism for file transfer, comprising: a pull-based delivery device adapted to access said output data generator and to pull at least one data file from said output generating device by said pull-based delivery mechanism, a trigger unit adapted to trigger said pull-based delivery device in response to receiving a file transfer request message from an output data generator indicating at least one data file to be transferred from said output data generator to said post-processor and an identification of the data generator from which the data file is to be transferred.

Furthermore, yet another preferred aspect of the invention is an output data generator for generating output data files to be transferred to a post-processor, said output data generator and said post-processor both being part of a telecommunication system and supporting a pull-based delivery mechanism for file transfer, comprising: a data file identification unit adapted to identify one or more data files to be transferred to said post-processor, and a data transfer request unit adapted to send from said output data generator to said post-processor a file transfer request message indicating said at least one identified data file and an identification of the data generator from which the data file is to be transferred, for triggering the pull-based delivery service to access the output data generator and to pull the at least one identified data file to said post-processor.

Another preferred aspect of the invention is a telecommunication system for generating and post-processing data files including one or more of the post-processors as mentioned above, and one or more data generators as mentioned above.

In accordance with the present invention as mentioned above, the file transfer is exclusively carried out from the post-processor side whose file transfer mechanism is triggered by a request message sent from the data generator side. Since the data generator side only has to send the request message, and all other functions of file transfer are carried out on the post-processor side, the processing load on the data generator side is reduced drastically. If the data generator is a GSN node of a GPRS system, such a technique may be called "GSN initiated push-based CDR-file delivery". The processing device of the post-processor can now take care of all the housekeeping functions, and therefore there is also no danger that the post-processor will start processing the transferred data before it has actually carried out the maintenance, data consistency etc.

Although the present invention is not limited to a specific telecommunication system, the data generator may preferably be a network element of the telecommunication system, the post-processor may be a billing device of the telecommunication network and the data files to be transferred may be charge data files containing charge data records of telephone calls collected by the network element.

Further preferably, the network element may be a GPRS support node of a general packet radio service, and as billing device a billing gateway of the telecommunication system may be used.

Preferably, the file transfer mechanism used by the post-processor may be FTP over TCP/IP, FTAM over TCP/IP or RPC over TCP/IP.

Hereinafter, the invention will be explained with reference to what is currently regarded as the best mode of the invention by the inventors. However, the invention can comprise further modifications and variations on the basis of the teachings herein. In particular, the invention may comprise embodiments which consist of combinations of features and steps which have been separately described in the description and/or claimed in the claims.

Furthermore, other advantageous embodiments and improvements of the invention are listed in the dependent claims. Hereinafter, advantageous embodiments of the invention will be described with reference to the drawings.

### BRIEF DESCRIPTION OF THE DRAWINGS

- Fig. 1: shows a telecommunication system SYS comprising a PLMN network PLMN and a GPRS network GPRS in accordance with the prior art;
- Fig. 2: shows a file transfer between a data generator NE and a post-processor BG in the telecommunication system SYS of Fig. 1;
- Fig. 3: shows a file transfer between a data generator NE and a post-processor POST in accordance with the invention; and
- Fig. 4: shows a more detailed flowchart of a file transfer between a data generator NE and a post-processor POST in accordance with the invention.

It should be noted that in the drawings the same or similar reference numerals denote the same or similar parts and steps throughout the description. Furthermore, it should be noted that hereinafter the invention will be described with specific reference to units used in a telecommunication system SYS consisting of a PLMN network and a GPRS network, as shown in Fig. 1. However, the present invention may be used for data file transfer in any other type of a telecommunication system SYS where there is need for transferring a data file from a data generator to a processor. Furthermore, although in the following description the post-processor, e.g. a billing gateway, is often described as belonging to a telecommunication system, it should be noted that it is not required that the post-processor is part of the telecommunication system, i.e. it can be provided outside the system or may be part of another system.

### DETAILED DESCRIPTION OF THE INVENTION

The present invention is applicable to a telecommunication system SYS where one of the units of the telecommunication system comprises an output data generator which collects data to be transferred to a post-processing device, wherein both the post-processor and the output data generator are part of the telecommunication system. As shown in Fig. 3, the data generator comprises a file server FS₁ for storing data files CDRF₁, a file transfer device TR₁ and a processing means PR₁ as shown in Fig. 2 of the prior art. Likewise, the post-processor POST comprises a file server FS₂, a file transfer device TR₂ and a processing device PR₂.

The data generator NE and the post-processor POST shown in Fig. 3 are part of the telecommunication system SYS, for example part of a telecommunication system SYS, as already described above with reference to Fig. 1. In such a case the data generator is formed by a network element NE of the telecommunication system and the post-processor POST can be a billing device BGw of the telecommunication system SYS. Preferably, but not exclusively, the data generator can be a GPRS (GPRS: General Packet Radio Switch) Service Node GSN and the billing device BGw can be a Billing Gateway BGw of said telecommunication system SYS. Furthermore, as already described above with reference to Fig. 1, the collected data which is stored as data file CDRF_{S} on the file server FS₁ of the GSN node may be a charge-related data, in particular so-called Charge Data Records CDR.

Furthermore, the actual file transfer protocol used between the data generator NE and the post-processor POST may be one of the above described techniques, such as FTP over TCP/IP, FTAM over TCP/IP, a disc (local or mounted on the data generator file server), or RPC over TCP/IP. However, such transfer devices TR₁, TR₂ using such types of transfer protocols are used, in accordance with the invention, differently as in the prior art described in Fig. 1, Fig. 2.

In order to allow this different use, the data generator NE in accordance with Fig. 3 comprises a data file identification unit IDM which is adapted to identify one or more data files CDRFs of the file server FS₁ which need to be transferred to the post-processor POST. For example, the data file identification unit IDM carries out an identification of the CDR files to be transferred to the billing gateway BGw (by time and volume base control).

Furthermore, the data generator NE comprises a data transfer request unit CDRQ which is adapted to send from the output data generator NE to said post-processor POST a file transfer request message RQ.

Preferably, the data transfer request unit CDRQ includes in the file transfer request message RQ an identification of the data generator from which the data file is to be transferred. Alternatively, an identification of the sending data generator may be provided to the post-processor via different means. For example, an identification of the data generator may be derived from a sender ID included in a message or a data packet or a transmission channel used for the transmission of said message or data packet. That is, whenever a file transfer is requested from the data generator, all that is necessary is that in connection with the making of the request somehow an identification of the requesting data generator is provided to the post-processor in case that there is more than one data processor. That is, if the post-processor is only connected to one data generator, then there may be a case where there is no need for any identification provision at all because the post processor will only perform a file transfer for this single data processor. In this case, a default identification for the data generator may be used in the post-processor.

If for example in accordance with the specific protocol the network element (data generator) is identified by an address "ne.ericsson.se", such type of identification is included in the file transfer request message RQ. Furthermore, the transfer request message RQ may preferably include an indication of at least one data file CDRFs identified by the data file identification unit IDM.

The reason why the identification of the data file is optional is for example because the data generator NE actually only collects data (e.g. charge-related data) into one transferable data file (e.g. CDR file). Thus, the post processor POST will only have to pull one data file at any one time and it will always be the same data file which needs to be transferred. In this case, either no file name at all is necessary, i.e. the post processor always pulls "the data file", or alternatively a predefined file name (default name) can be negotiated between data generator and post processor, i.e. in the post processor a predefined file name can be preset and the post processor always uses this default file name. If the post processor operates for pulling files from several different data generators, the predefinition may also be provided data generator-specific, i.e. a different default file name for each data generator.

Another reason why the file name may not be specified in the request message is when indeed several files are present and/or need to be transferred. In this case, even without specifying all data file names in the original request message, after the post-processor has started the file transfer session (as explained below), the identification unit can send a single additional message or several additional messages containing the one or more file names to the post processor. Alternatively, the data file indication unit of the data generator may set a read status of predefined some data files to "read not permitted" and the read status of the data file(s) to be transferred to "read permitted" such that the data processor in the pull-based data transfer session will be able to only read the data file(s) having the "read permitted" status. Therefore, there is not always the need to indicate the data file identifications (e.g. data file names) already in the original request message.

The post-processor in accordance with the invention is intendent to fetch an output data file CDRFs from the output data generator by using a pull-based delivery device TR₂. That is, the post-processor comprises a pull-based delivery service TR₂ which is adapted to access the output data generator and to pull at least one data file CDRFs from the output generating device NE by a pull-based delivery technique. That is, in accordance with the invention the post-processor POST is the very device which transfers (fetches or pulls) the data file from the data generator.

A trigger unit TRIG is provided in order to trigger the pull-based delivery device TR₂ in response to receiving the file transfer request message RQ from the output data generator NE. Since the request message RQ contains at least the indication of the data file CDRF to be transferred as well as an identification of the data generator from which the data file is to be transferred, the pull-based delivery device is completely independently carrying out the fetching of the data file from the data generator. Since it is entirely up to the post-processor POST to retrieve the data file without an involvement of the data generator CPU, such type of data file transfer is hereinafter called "pull-based", i.e. the post-processor "pulls" a data file from the data generator.

Since the complete handling of the communication session for data transfer is carried out by the post-processor, and the transfer of the data file as well as the reading of the data file from the file server FS₁ is controlled from the post-processor side, the tasks to be executed by the CPU of the data generator (GSN node) can be reduced to a minimum. Therefore, the processing burden on the CPU of the data processor is drastically reduced. On the other hand, since the post-processor POST is the only unit which actually takes care of the control of the data transfer, it can also be avoided that the post-processor starts processing a data file before it has been transferred completely into its memory. Thus, it can be avoided that the data processor (GSN node) needs to assure the safe transfer of the data to the post-processor, to assure the data consistency on the file server FS₂ of the post processor, to handle temporary file names, or to keep track of the data already transferred in order to avoid a processing of the data file before all data has actually been transferred.

### EMBODIMENTS OF THE INVENTION

In addition to showing the identification unit IDM and the request unit CDRQ on the data generator side and the trigger means TRIG on the post-processor side, respectively, Fig. 3 also shows a principal flow of exchange of signalling messages for the output data file transfer.

As first step, carried out before step S11, the data file identification unit IDM determines a data file to be transferred to the post-processor. In step S11, the data transfer request unit CDRQ sends a file transfer request message RQ to the post-processor. The request message RQ contains an identification of the data generator from which the data file is to be transferred and optionally, as explained above, an identification of the at least one data file to be transferred. That is, the request message RQ contains all information which is necessary in the post-processor to carry out a pull-based transfer of the data file. In one embodiment the message RQ can be sent as a Remote Procedure Call (RMC).

When the post-processor POST receives the transfer request message RQ after step S11, the post-processor POST itself may be in one of two different operation conditions. In case the post-processor POST is in status "stopped" or no pull-based delivery mechanism is configured in the post-processor to receive data from a specified data generator, the post-processor POST will, in response to the transfer request message RQ, respond with a reject message RJ in step S11''. This indicates that the requested file transfer session cannot be activated.

Alternatively, if the post-processor is in the status "running", it will respond with an acknowledgement message ACK in step S11' indicating that the data files, e.g. CDR-files that are desired to be transferred, will be handled in a file transfer (e.g. FTP) session where the post-processor acts as an initiator.

If the file transfer mechanism in the transfer unit TR₂ is for example a RPC-FTP delivery mechanism, the RPC-FTP represents an additional RPC interface in the post-processor which is used for initiating a FTP file transfer in a pull-based manner from the data generator. That is, the triggering unit TRIG is a RPC interface which triggers a FTP session to be carried out in the delivery device TR₂. Thus, the procedure of retrieving a data file from the data generator in step S1234 in Fig. 3 may be called a "post-processor initiated push-based CDR-file delivery technique". In case a file delivery is required (e.g. due to a volume threshold or due to an expiring timer in the data generator), the data generator (the GSN node) initiates the data delivery by calling the newly introduced interface function TRIG (the additional RPC interface) on the post-processor. Thus, the post-processor file transfer mechanism TR₂ is requested to set up a FTP session with the data generator identified in the transfer request message RQ.

Fig. 4 shows step S1234 in Fig. 3 as steps S12, S13, S14 with more detail. That is, in step S12, in response to having been triggered by the trigger unit TRIG (the RPC interface function), the pull-based delivery device TR₂ tries to access the data generator NE. More particularly, if a RPC initiated FTP session is started, step S12 comprises a log-in of the post-processor POST into the data generator NE, more precisely into its file server FS₁. In step S13, the file transfer device TR₂ reads the data file(s) from the file server FS₁ of the data generator, transfers the data to its own file server FS₂ and, while doing so, checks a correct data retrieval and a data consistency, and handles a temporary file naming and an optional deletion of the data from the file server FS₁ of the data generator NE. In step S14, a release message is sent from the post-processor, e.g. a log-out message to cancel the file transfer session.

If the original request message RQ already contains the indication(s) of the data files, then, in the reading step S13, the post processor POST reads all the data files which have been indicated in the request message RQ. If the request message does not contain any indication of data files and there is only one file to be transferred in the data generator, then the post processor fetches only this one data file or, as explained above, the data file(s) with the default name(s) preset in the post processor and previously negotiated with the data generator. Alternatively, in case no file names are specified in the request message RQ, the post processor may receive from the data generator, after the data generator recognizes that the post processor starts the transfer session in response to the triggering, one or more file name indication messages. This somewhat increases the CPU load on the data generator side, however, the main CPU burden for the file transfer is still with the post processor POST. Further alternatively, the post processor just reads all files, without any indication in the original request message RQ and without any further indication messages from the data generator, whose read status has been set to "read allowed" by the data file identification unit.

As may be appreciated from Fig. 3 and Fig. 4, since the data generator NE only has the task to compose a transfer request message RQ and to transfer same to the post-processor with the data generator identification and a data file identification, the CPU load on the data generator (GSN node) is reduced as far as feasible. That is, the data generator can carry on with other processing tasks while the post-processor accesses the filer server FS₁ of the data generator completely autonomously in a file transfer session triggered by the data generator NE.

For example, if the post-processor is a billing gateway BGw, a pull-based delivery mechanism is normally already offered such that a push-based delivery mechanism does not need to be implemented to a full extent. The billing gateway BGw only needs to be extended to include the interface function for triggering the pull-based delivery mechanism TR₂, and the data generator NE only needs to be extended to include an identification of files (by means of volume and time base control) that are to be transferred to the GSN side, and to make a call to an interface function offered by the BGw on the GSN side in case the CDR files need to be actively transferred to the billing gateway BGw. Furthermore, since the task to ensure the data consistency (i.e. to ensure that CDR-files were correctly transferred), to handle temporary file names and to delete the CDR files on the file server FS₁ are all being taken care of by the post-processor, there is no undue burden on the CPU of the data generator.

Whilst a particularly advantageous use of the present invention relates to the transfer of charge data records in data files, any other type of data may be transferred within the telecommunication system SYS, the common feature being that a FTP file transfer session carried out in the post-processor in order to pull a data file is initiated (triggered) from the data generator side. The pull-based delivery mechanism used in the transfer device TR₂ for accessing and pulling the data file, may be the File Transfer Protocol FTP over the Transmission Control Protocol/Internet Protocol TCP/IP, a File Transfer/Access and Management FTAM over the TCP/IP or a remote procedure call RPC over the TCP/IP. Furthermore, a network element may be a GPRS support node GSM of a general packet radio service of the telecommunication system, and the billing device BGw may be a billing gateway BGw of the telecommunication system.

Whilst in Fig. 1 a cellular telecommunication system is used for the PLMN network and the GPRS network, the principle of the invention is equally well applicable to any other telecommunication system SYS where there is a need for a data file transfer to a post-processing or processing device.

### INDUSTRIAL APPLICABILITY

In accordance with the invention a post-processor in a telecommunication system comprises a pull-based file transfer device which can establish and handle file transfer sessions in a pull-manner from a data generator of the telecommunication system SYS. The pull-based file transfer, e.g. a FTP-based pull delivery mechanism, is triggered by an interface function which receives a file transfer request RQ from a data generator. Since the post-processor is responsible for the complete file transfer, the processing burden on the CPU (central processing unit) of the data generator is alleviated. All processing functions for the file transfer are carried out from the post-processor in response to the triggering performed in response to the receipt of the file transfer request message RQ.

Such a file transfer technique may be applied to any type of data transfer between nodes, units or any type of network elements in a telecommunication system. A particular advantageous use is the transfer of billing data to a post-processing billing device of the telecommunication system SYS from a GSN node of a GPRS system.

Furthermore, other variations and modifications of the invention may be derived on the basis of teachings disclosed herein. In particular, the invention may comprise embodiments which have been separately described in the description and/or claimed in the claims. Therefore, all such modifications and variations as apparent to a skilled person on the basis of the above description and the claims, reflecting the best mode of the invention as currently conceived by the inventors, fall within the scope of the attached claims.

Reference numerals in the claims only serve clarification purposes and do not limit the scope of these claims.

## Claims

1. A method for transferring an output data file (CDRF) from an output data generator (NE) to a post-processor (POST; BGw) which both support a pull-based delivery mechanism (TR2) for file transfer, at least said output data generator (NE) being part of a telecommunication system (SYS), comprising the following steps:
**a)** sending (S11) from said output data generator (NE) to said post-processor (POST; BGw) a file transfer request message (RQ);
**b)** triggering (S12) in said post-processor (POST; BGw) said pull-based delivery device (TR2) in response to said file transfer request message (RQ) ;
**c)** accessing (S12) said output data generator (NE) from said post-processor (POST; BGw) by said pull-based delivery device (TR2); and
**d)** pulling (S13) the at least one data file (CDRF) from said output generating device (NE) to said post-processor (POST; BGw) by said pull-based delivery device (TR2).

2. A method according to claim 1,
***characterized in that***
after step a) an acknowledgment message (ACK) is sent back from said post-processor (POST; BGw) to said data generator (NE) when said post-processor (POST; BGw) is in a running state.

3. A method according to claim 1 or 2,
***characterized in that***
after step a) a reject message (REJ) is sent back from said post-processor (POST; BGw) to said data generator (NE) when said post-processor (POST; BGw) is in a stopped state or has not implemented a pull-based file delivery mechanism (TR2).

4. A method according to claim 1 or 2 or 3,
***characterized in that***
in said step c) the post-processor (POST) sets up a pull-based file transfer session (S12, S13, S14).

5. A method according to one or more of claims 1 to 4,
***characterized in that***
said pull-based delivery mechanism (TR2) used in said post-processor (POST) for accessing and pulling the data file is a File Transfer Protocol (FTP) over the Transmission Control Protocol/Internet Protocol (TCP/IP), a File Transfer/Access and Management (FTAM) over the TCP/IP or a Remote Procedure Call (RPC) over the TCP/IP.

6. A method according to one or more of claims 1 to 5,
***characterized in that***
for said telecommunication system (SYS) a cellular telecommunication system (PLMN; GPRS) is used.

7. A method according to one or more of claims 1 to 6,
***characterized in that***
as said data generator (NE) a network element (NE) of said telecommunication system (SYS) is used, as said post-processor (POST) a billing device (BGw) of said telecommunication network (SYS) is used and as said data files (CDRF) to be transferred charge data files (CRDF) containing charge data (CDR) of telephone calls collected by said network element (NE) are used.

8. A method according to one or more of claims 1 to 7,
***characterized in that***
as said network element (NE) a GPRS Support Node (GSN) of a General Packet Radio Service (GPRS) of said telecommunication system (SYS) is used, as said billing device (BGw) a Billing Gateway (BGw) of said telecommunication system (SYS) is used and as said charge data (CRD) Charge Data Records (CRD) are used.

9. A method according to one or more of claims 1 to 8,
***characterized in that***
said transfer session comprises a login (S12) step of said post-processor (POST) into said data generator (NE), a file transfer (S13) step and a logout (S14) step from said data generator (NE).

10. A method according to one or more of claims 1 to 9,
***characterized in that***
said file transfer request message (RQM) is a Remote Procedure Call (RPC).

11. A post-processor (POST) for fetching an output data file (CDRFL) from an output data generator (NE) both supporting a pull-based delivery mechanism (TR2) for file transfer, at least said output data generator (NE) being part of a telecommunication system (SYS), comprising:
**a**) a pull-based delivery device (TR2) adapted to access said output data generator (NE) and to pull at least one data file (CDRF) from said output generating device (NE) by said pull-based delivery mechanism (TR2);
**b)** a trigger unit (TRIG) adapted to trigger said pull-based delivery device (TR2) in response to receiving a file transfer request message (RQ) from an output data generator (NE).

12. A post-processor according to claim 11,
***characterized in that***
said pull-based delivery mechanism (TR2) used in said post-processor (POST) for accessing and pulling the data file is a File Transfer Protocol (FTP) over the Transmission Control Protocol/Internet Protocol (TCP/IP), a File Transfer/Access and Management (FTAM) over the TCP/IP or a Remote Procedure Call (RPC) over the TCP/IP.

13. A post-processor according to claim 11 or 12,
***characterized in that***
said telecommunication system (SYS) is a cellular telecommunication system (PLMN; GPRS).

14. A post-processor according to one or more of claims 11 to 13, ***characterized in that***
said post-processor (POST) is a billing device (BGw) of said telecommunication network (SYS) and said data files (CDRF) to be transferred are charge data files (CRDF) containing charge data (CDR) of telephone calls collected by said network element (NE).

15. A post-processor according to one or more of claims 11 to 14, ***characterized in that***
said billing device (BGw) is a Billing Gateway (BGw) of said telecommunication system (SYS) and said charge data (CRD) are Charge Data Records (CRD).

16. An output data generator (NE) for generating output data files (CDRF) to be transferred to a post-processor (POST; BGw), both said output data generator (NE) and said post processor (POST; BGw) supporting a pull-based delivery mechanism (TR2) for file transfer, at least said output data generator (NE) being part of a telecommunication system (SYS), comprising a data transfer request unit (CDRRQ) adapted to send from said output data generator (NE) to said post-processor (POST; BGw) a file transfer request message (RQ) for triggering the pull-based delivery service (TR2) to access the output data generator (NE) and to pull at least one data file (CDRF) to said post-processor (POST).

17. A output data generator according to claim 16,
***characterized in that***
said telecommunication system (SYS) is a cellular telecommunication system (PLMN; GPRS).

18. A output data generator according to claim 16 or 17,
***characterized in that***
said data generator (NE) is a network element (NE) of said telecommunication system (SYS) and said data files (CDRF) to be transferred charge are data files (CRDF) containing charge data (CDR) of telephone calls collected by said network element (NE).

19. A output data generator according to claim 18,
***characterized in that***
said network element (NE) is a GPRS Support Node (GSN) of a General Packet Radio Service (GPRS) of said telecommunication system (SYS) and said charge data (CRD) are Charge Data Records (CRD).

20. A output data generator according to one or more of claims 16 to 19, ***characterized in that***
said file transfer request message (RQM) is a Remote Procedure Call (RPC).

21. A telecommunication system (SYS) for generating and post processing data files (CDRF) including one or more of said post-processors (POST) according to one or more of claims 11-15 and one or more data generators according to one or more of claims 16-20.

22. A method according to one or more of claims 1 to 10,
***characterized in that***
said file transfer request message (RQ) comprises an identification of the at least one data file (CDRF) to be transferred from said output data generator (NE) to said post-processor (POST; BGw) and an identification ("ne.ericsson.se") of the data generator (NE) from which the data file (CDRF) is to be transferred.

23. A post processor (POST) according to one or more of claims 11 to 15, ***characterized in that***
said file transfer request message (RQ) comprises an identification of the at least one data file (CDRF) to be transferred from said output data generator (NE) to said post-processor (POST; BGw) and an identification ("ne.ericsson.se") of the data generator (NE) from which the data file (CDRF) is to be transferred.

24. An output data generator according to one or more of claims 16 to 20, ***further comprising*** a data file identification unit (IDM) adapted to identify one or more data files (CDRF) to be transferred to said post-processor (POST).

25. An output data generator according to one or more of claims 24, ***characterized in that***
said file transfer request message (RQ) comprises an identification of the at least one identified data file (CDRF) to be transferred from said output data generator (NE) to said post-processor (POST; BGw) and an identification ("ne.ericsson.se") of the data generator (NE) from which the data file (CDRF) is to be transferred.
